# EUROPÄISCHE PATENTSCHRIFT

(11) **EP 2 644 962 B1**
(45) Veröffentlichungstag und Bekanntmachung des Hinweises auf die Patenterteilung: **14.10.2015**
(21) Anmeldenummer: 12002345.2
(22) Anmeldetag: 30.03.2012
(51) Int. Cl.: F16P 3/14

(54) **Umformeinrichtung und Verfahren zum Betreiben der Letzteren**
Reshaping device and method for operating same
Dispositif de déformation et procédé de fonctionnement d'un dispositif de déformation

(43) Veröffentlichungstag der Anmeldung: 02.10.2013
(73) Patentinhaber: Fiessler Elektronik GmbH & Co. KG, 73734 Esslingen (DE)
(72) Erfinder: Fiessler, Lutz Dr, 73773 Aichwald (DE)
(74) Vertreter: Patentanwälte Magenbauer & Kollegen Partnerschaft mbB

(56) Entgegenhaltungen:
- EP-A2- 1 327 815
- WO-A1-01/92777
- WO-A1-97/21182
- DE-A1- 19 717 299

## Beschreibung

Die Erfindung betrifft eine Umformeinrichtung mit einem Maschinenbett, einem relativbeweglich am Maschinenbett aufgenommenen Werkzeugträger zur Aufnahme eines Werkzeugs, einer mit dem Werkzeugträger gekoppelten Antriebseinrichtung, einer Maschinensteuerung zur Ansteuerung der Antriebseinrichtung und einer Überwachungseinrichtung, die zur Überwachung von Bewegungen des Werkzeugträgers und zur Bereitstellung eines Abschaltsignals an eine der Antriebseinrichtung vorgeschaltete Trenneinrichtung bei Auftreten eines vorgebbaren Überwachungsfalls ausgebildet ist, wobei die Überwachungseinrichtung wenigstens eine Strahlungsquelle und mehrere der Strahlungsquelle gegenüberliegend angeordnete Strahlungsdetektoren umfasst und wobei zumindest ein Teil der von der Strahlungsquelle ausgehenden Strahlenbündel längs einer Arbeitskante des Werkzeugs ausgerichtet ist. Ferner betrifft die Erfindung ein Verfahren zum Betreiben einer Umformeinrichtung.

Die DE 102004058472 A1 offenbart eine Sicherheitseinrichtung und ein Verfahren zum Bestimmen eines Nachlaufweges bei einer Maschine, bei der ein erstes Maschinenteil eine Arbeitsbewegung gegen ein zweites Maschinenteil ausführt. Dabei umfasst die Maschine zumindest eine erste und eine zweite optische Schranke. Die beiden optischen Schranken bewegen sich in der Arbeitsbewegung mit dem ersten Maschinenteil mit. Dabei eilt die erste optische Schranke dem ersten Maschinenteil in einem ersten Abstand voraus und die zweite optische Schranke ist in einem zweiten Abstand zu der ersten optischen Schranke angeordnet. Ferner ist eine Steuereinheit vorhanden, die dazu ausgebildet ist, die Arbeitsbewegung des ersten Maschinenteils zu stoppen, wenn die erste optische Schranke unterbrochen wird. Zudem sind eine Prüfeinheit und eine Sperreinheit vorgesehen, wobei mit Hilfe der Prüfeinheit geprüft werden kann, ob die zweite optische Schranke nach einem Stopp des ersten Maschinenteils unterbrochen ist. Die Sperreinheit dient zum Sperren der Arbeitsbewegung in Abhängigkeit von dem Prüfergebnis der Prüfeinheit.

In der DE 102004058472 A1 wird auf die DE 202 17 426 U1 verwiesen, die sich mit der Bestimmung des Nachlaufwegs des Werkzeugs bei Abschaltung der Antriebseinrichtung befasst und die zu diesem Zweck die Nutzung einer CNC-Steuerung und des zugehörigen Wegmesssystems offenbart. Als Nachteil dieser Vorgehensweise wird von der DE 102004058472 A1 der erhebliche Aufwand angesehen, um eine gemäß den relevanten Sicherheitsbestimmungen, insbesondere der europäischen Norm EN 954-1, sichere Bestimmung und Überwachung des Nachlaufwegs zu gewährleisten.

Die WO 01/92777 A1 offenbart eine Schutzeinrichtung für Maschinen wie Abkantpressen, bei denen ein erstes Maschinenteil Arbeitsbewegungen gegen ein zweites Maschinenteil ausführt, mit einer zwischen den Maschinenteilen positionierten und am bewegbaren Maschinenteil angebrachten Lichtschrankenanordnung, mit einer bei einer Lichtstrahlunterbrechung die Arbeitsbewegung des bewegbaren Maschinenteils stoppenden Stoppeinrichtung und mit einer die Stoppeinrichtung wenigstens unmittelbar vor einer Lichtstrahlunterbrechung durch das andere Maschinenteil deaktivierenden Deaktivierungseinrichtung, wobei eine Geschwindigkeitsmesseinrichtung für das bewegbare Maschinenteil vorgesehen ist und die Deaktivierungseinrichtung Mittel zur wenigstens teilweisen Deaktivierung der Stoppeinrichtung unterhalb einer vorgebbaren Grenzgeschwindigkeit besitzt und wobei eine Steuervorrichtung für die Arbeitsbewegung des bewegbaren Maschinenteils die Geschwindigkeit unmittelbar vor einer Lichtstrahlunterbrechung durch das andere Maschinenteil unter die Grenzgeschwindigkeit absenkt.

Die Aufgabe der Erfindung besteht darin, eine Umformeinrichtung und ein Verfahren zum Betreiben einer Umformeinrichtung bereitzustellen, bei denen ein sicherheitsgerichtetes Abschalten der Antriebseinrichtung im Überwachungsfall mit geringem technischem Aufwand erreicht werden kann.

Diese Aufgabe wird gemäß einem ersten Aspekt der Erfindung für eine Umformeinrichtung der eingangs genannten Art mit den Merkmalen des Anspruchs 1 gelöst. Hierbei ist vorgesehen, dass die Überwachungseinrichtung dazu ausgebildet ist, bei einer Annäherungsbewegung des Werkzeugträgers gegenüber dem Maschinenbett mit einer ersten Bewegungsgeschwindigkeit eine Überwachung einer Strahlungsbeaufschlagung von mehreren Strahlungsdetektoren mittels der Überwachungseinrichtung vorzunehmen, wobei ein erster Strahlungsdetektor längs einer Schließbewegungsrichtung des Werkzeugträgers mit einem Abstand von der Arbeitskante des Werkzeugs entfernt angeordnet ist, der einem Nachlaufweg des Werkzeugträgers bei Abschaltung der Antriebseinrichtung aus der ersten Bewegungsgeschwindigkeit entspricht, und eine Position des Werkzeugträgers längs der Schließbewegungsrichtung durch die Maschinensteuerung zu ermitteln und ein Prüfsignal von der Maschinensteuerung an die Überwachungseinrichtung bei Erreichen einer vorgebbaren, von der Maschinensteuerung ermittelten Relativposition bereitzustellen sowie eine Strahlungsbeaufschlagung der Strahlungsdetektoren zu überwachen, wobei ein zweiter Strahlungsdetektor längs der Schließbewegungsrichtung des Werkzeugträgers mit einem Abstand von der Arbeitskante des Werkzeugs entfernt angeordnet ist, der einer Summe des Nachlaufwegs des Werkzeugträgers bei Abschaltung der Antriebseinrichtung aus der ersten Bewegungsgeschwindigkeit und einem vorgebbaren Sicherheitsabstand entspricht, und das Abschaltsignal an die der Antriebseinrichtung vorgeschaltete Trenneinrichtung bereitzustellen, wenn der erste Strahlungsdetektor zum Zeitpunkt der Bereitstellung des Prüfsignals nicht mit Strahlung des Strahlenbündels beaufschlagt ist und/oder wenn der zweite Strahlungsdetektor zum Zeitpunkt der Bereitstellung des Prüfsignals mit Strahlung des Strahlenbündels beaufschlagt ist.

Hiermit kann die Überwachungseinrichtung also zusätzlich zu ihrer Grundfunktion, die in der Überwachung von Eingriffen eines Benutzers in eine vorgegebene Sicherheits- und Gefahrenzone liegt, zusätzlich zur Überprüfung einer tatsächlichen Position des Werkzeugträgers genutzt werden. Dies ist insbesondere dann von Interesse, wenn der Werkzeugträger und das daran aufgenommene Werkzeug mit möglichst hoher Geschwindigkeit möglichst nahe bis an der Werkstück gefahren werden sollen und erst kurz vor Berührung des Werkstücks durch das Werkzeug eine Abbremsung des Werkzeugträgers erfolgen soll, um damit einen möglichst schnellen Bearbeitungsvorgang für das Werkstück sicherzustellen. Hierzu wird von der Maschinensteuerung ein Prüfsignal bereitgestellt, wenn der Werkzeugträger nach dem Ermessen der Maschinensteuerung eine Position erreicht hat, in der von der Überwachungseinrichtung ein vorgebbares Überprüfungsergebnis ermittelt wird, sofern der Werkzeugträger sich tatsächlich in der von der Maschinensteuerung ermittelten Position befindet. Sofern dies nicht der Fall sein sollte, da der Werkstückträger die Position noch nicht erreicht hat oder diese bereits passiert hat, wird von der Überwachungseinrichtung ein Abschaltsignal an die Trenneinrichtung ausgegeben, da in diesem Fall von einer Fehlfunktion der Maschinensteuerung auszugehen ist und ein sicherer Weiterbetrieb der Umformeinrichtung nicht gewährleistet ist.

Vorteilhafte Weiterbildungen der Erfindung sind Gegenstand der Unteransprüche.

In einer Ausgestaltung der Erfindung ist vorgesehen, dass die Maschinensteuerung gemäß einer ersten Sicherheitskategorie eines Sicherheitsstandards ausgebildet ist und dass die Überwachungseinrichtung und die Trenneinrichtung ein sicheres Arbeitssystem bilden, das gemäß einer zweiten Sicherheitskategorie des Sicherheitsstandards ausgebildet ist, wobei die zweite Sicherheitskategorie auf einem höheren Niveau als die erste Sicherheitskategorie innerhalb des Sicherheitsstandards angesiedelt ist.

Als Sicherheitsstandards stehen beispielsweise nationale oder internationale Normen wie die EN ISO 13849-1 und die EN/IEC 62061 zur Verfügung, in denen beispielsweise die Anforderungen an die Zuverlässigkeit und/oder an ein definiertes Verhalten von Maschinen und zugehörigen Maschinenkomponenten im Überwachungsfall festgelegt sind und in denen die Betriebssicherheit bzw. Ausfallsicherheit der Komponenten üblicherweise in klar voneinander abgrenzbaren Sicherheitsklassen oder Sicherheitskategorien eingeordnet ist. Typischerweise muss eine Komponente, die einer bestimmten Sicherheitskategorie eines Sicherheitsstandards zugeordnet werden soll, durch den Hersteller und/oder durch ein unabhängiges Prüfinstitut daraufhin untersucht und gegebenenfalls zertifiziert werden, ob sie sämtliche Anforderungen der jeweiligen Sicherheitskategorie erfüllt. Praktisch kann dies beispielsweise bedeuten, dass die Komponenten, die der höheren Sicherheitskategorie zuzurechnen sind, eine höhere Zuverlässigkeit und damit eine geringere Ausfallwahrscheinlichkeit aufweisen als die Komponenten, die der niedrigeren Sicherheitskategorie zuzurechnen sind.

Die Auslegung von Maschinenkomponenten auf die Anforderungen der jeweils angestrebten Sicherheitskategorie kann bei der Konstruktion und Herstellung der Komponenten und gegebenenfalls auch bei der Integration dieser Komponenten in die jeweilige Maschine einen erheblichen Aufwand bedeuten und damit die Herstellungskosten für die Maschine beeinträchtigen. Somit ist es zweckmäßig, eine möglichst geringe Zahl von Maschinenkomponenten gemäß einer hohen Sicherheitskategorie eines Sicherheitsstandards auszubilden, während die übrigen Komponenten der Maschine gemäß niedrigeren Sicherheitskategorien und damit kostengünstiger ausgebildet sind.

Erfindungsgemäß ist die Systemgrenze für das sichere Arbeitssystem um die Gruppe von Komponenten der Umformeinrichtung, die gemäß einer gemeinsamen, hohen Sicherheitskategorie ausgebildet sind, eng gezogen, um die Anzahl der Komponenten im sicheren Arbeitssystem und damit die Kosten für das sichere Arbeitssystem gering zu halten.

Vorliegend sind lediglich die Überwachungseinrichtung, die die Relativbewegung des Werkzeugträgers gegenüber dem Maschinenbett überwacht, sowie die Trenneinrichtung, die im Überwachungsfall zur Abtrennung der Energieversorgung für die Antriebseinrichtung ausgebildet ist, als Bestandteil des sicheren Arbeitssystems vorgesehen. Vorzugsweise ist die Überwachungseinrichtung als eigenständige Komponente ausgebildet, die auch an eine bestehende Umformeinrichtung nachgerüstet werden kann, ohne tiefgehende Eingriffe an der Maschinensteuerung vornehmen zu müssen, ausgebildet. Besonders bevorzugt ist die Überwachungseinrichtung manuell oder motorisch verstellbar an dem zur Aufnahme eines Werkzeugs vorgesehenen Werkzeugträger angebracht und ist für eine Kommunikation mit der Maschinensteuerung ausgebildet. Dadurch können beispielsweise werkzeugspezifische Kennwerte wie eine Ausdehnung des Werkzeugs und eine Ausdehnung eines am Maschinenbett festzulegenden Gegenwerkzeugs längs der Schließrichtung des Werkzeugs gegenüber dem Gegenwerkzeug sowie gegebenenfalls die Materialstärke des zu bearbeitenden Werkstücks an die Überwachungseinrichtung bereitgestellt werden, um diese in geeigneter Weise längs der Schließrichtung am Werkzeugträger positionieren zu können.

Zweckmäßig ist es, wenn die Maschinensteuerung ein Wegmesssystem für eine Ermittlung einer Relativposition des Werkzeugträgers gegenüber dem Maschinenbett umfasst und zur Bereitstellung eines Prüfsignals bei Erreichen einer vorgebbaren Relativposition während eines Annäherungsvorgangs des Werkzeugträgers an das Maschinenbett ausgebildet ist. Mit Hilfe des Wegmesssystems kann die Position des Werkzeugträgers längs der Schließrichtung gegenüber dem Maschinenbett oder einem am Maschinenbett anbringbaren Gegenwerkzeug gesteuert oder geregelt werden, wobei für die nachstehenden Ausführungen aus Gründen der Vereinfachung eine Beschränkung auf den Begriff des Maschinenbetts stattfindet, der das gegebenenfalls vorgesehene Gegenwerkzeug umfassen soll. Erfindungsgemäß ist vorgesehen, dass das Wegmesssystem und die Maschinensteuerung im Sinne des Sicherheitsstandards, der der Konzeption der Umformeinrichtung zugrundeliegt, für sich allein betrachtet nicht ausreichend sicher sind, um einen Betrieb der Umformeinrichtung gewährleisten zu können, bei dem Verletzungen eines Bedieners mit der vom Sicherheitsstandard geforderten Sicherheit ausgeschlossen werden können. Dementsprechend ist die Maschinensteuerung primär für die Steuerung oder Regelung des Umformvorgangs vorgesehen, jedoch nicht für deren sicherheitstechnische Überwachung. Die Maschinensteuerung leistet im Hinblick auf Sicherheitsfunktionen, mit denen Verletzungen eines Bedieners mit der vom Sicherheitsstandard geforderten Sicherheit ausgeschlossen werden können, dahingehend einen Beitrag, dass bei Erreichen einer vorgebbaren Relativposition während eines Annäherungsvorgangs des Werkzeugträgers an das Maschinenbett ein Prüfsignal an die Überwachungseinrichtung bereitgestellt wird. Dieses Prüfsignal ist derjenigen Sicherheitskategorie zuzurechnen, die die Maschinensteuerung innerhalb des Sicherheitsstandards einnimmt. Da die Sicherheitskategorie der Maschinensteuerung erfindungsgemäß niedriger als die Sicherheitskategorie der Überwachungseinrichtung ist, wird das Prüfsignal umgangssprachlich auch als "unsicher" bezeichnet. Das Prüfsignal dient dazu, in der Überwachungseinrichtung einen vorgegebenen und mit der Sicherheitskategorie der Überwachungseinrichtung durchzuführenden Prüfungsschritt auszulösen, mit dessen Hilfe eine Aussage über die tatsächliche Position des Werkzeugträgers gegenüber dem Maschinenbett getroffen werden kann. Diese Aussage wird auf dem Niveau der Sicherheitskategorie der Überwachungseinrichtung getroffen und wird daher umgangssprachlich als "sichere" Aussage bezeichnet.

In weiterer Ausgestaltung der Erfindung ist vorgesehen, dass die der Strahlungsquelle gegenüberliegend angeordneten Strahlungsdetektoren der Überwachungseinrichtung, die zur Erfassung der längs der Arbeitskante des am Werkzeugträger aufgenommenen Werkzeugs ausgerichteten Strahlenbündel ausgebildet sind, jeweils wenigstens paarweise zur Erfassung eines Strahlenbündels eingerichtet sind. Hierdurch kann die Strahlungsquelle einfach gehalten werden, da jeweils wenigstens zwei Strahlungsdetektoren, die beabstandet zueinander angeordnet sind, von einem Strahlenbündel mit Strahlen beaufschlagt werden. Besonders vorteilhaft ist die zumindest paarweise Nutzung eines Strahlenbündels durch zwei oder mehrere Strahlungsdetektoren, wenn Strahlenbündel durch diskrete Strahlungsquellen, beispielsweise Leuchtioden, insbesondere Laserdioden, bereitgestellt werden. Die Strahlenbündel sind vorzugsweise derart gegenüber der Arbeitskante des Werkzeugs angeordnet, dass sie ein Eindringen eines Körperteils, insbesondere einer Hand, eines Bedieners an eine vom Werkzeug und dem Maschinenbett bestimmte Gefahrenzone detektieren können. Üblicherweise handelt es sich bei der Gefahrenzone um einen im Wesentlichen quaderförmigen Raumabschnitt, der sich von der Arbeitskante des Werkzeugs in Schließrichtung bis zum Maschinenbett erstreckt und der bei einer Arbeitsbewegung des Werkzeugs gegenüber dem Maschinenbett verkleinert wird, so dass die Gefahr eines Quetschens von Körperteilen besteht. Vorzugsweise ist die Überwachungseinrichtung sowohl für eine Überwachung der Gefahrenzone als auch für eine Überwachung einer an die Gefahrenzone angrenzenden, quer zur Schließbewegungsrichtung erstreckten Sicherheitszone ausgebildet. Diese Sicherheitszone ist in ihrer Erstreckung quer zur Schließbewegungsrichtung vorzugsweise variabel ausgestaltet. Vorzugsweise variiert die Erstreckung der Sicherheitszone in dieser Richtung in Abhängigkeit vom Abstand zwischen Werkzeug und Maschinenbett und/oder in Abhängigkeit von der Bewegungsgeschwindigkeit des Werkzeugs gegenüber dem Maschinenbett. Die Erstreckung der Sicherheitszone wird von der Anordnung der Strahlungsdetektoren sowie von der Einbeziehung der Signale der einzelnen Strahlungsdetektoren durch die Überwachungseinrichtung bestimmt.

Vorteilhaft ist es, wenn ein erster Strahlungsdetektor längs einer Schließbewegungsrichtung des Werkzeugträgers mit einem Abstand von der Arbeitskante des Werkzeugs entfernt angeordnet ist, der zumindest einem Nachlaufweg des Werkzeugträgers bei Abschaltung der Antriebseinrichtung aus einer ersten Bewegungsgeschwindigkeit, insbesondere einem Schnellgang, entspricht. Die Aufgabe für den ersten Strahlungsdetektor besteht darin, eine sichere Abschaltung der Antriebseinrichtung innerhalb des Nachlaufwegs, also desjenigen Bremswegs, den die Antriebseinrichtung zur Abbremsung des Werkzeugträgers ausgehend von der ersten Bewegungsgeschwindigkeit bis zum Stillstand benötigt, zu gewährleisten. Beispielsweise muss gewährleistet sein, dass bei Unterbrechung des Strahlenbündels, das den ersten Strahlungsdetektor beaufschlagt, beispielsweise durch die Hand eines Benutzers, der in den Gefahrenbereich eingreift, der Werkzeugträger so schnell zum Stillstand gebracht werden kann, dass die Hand des Benutzers nicht zwischen Werkzeug und Maschinenbett eingequetscht wird.

Bevorzugt ist ein zweiter Strahlungsdetektor längs der Schließbewegungsrichtung des Werkzeugträgers mit einem Abstand von der Arbeitskante des Werkzeugs entfernt angeordnet, der zumindest einer Summe des Nachlaufwegs des Werkzeugträgers bei Abschaltung der Antriebseinrichtung aus dem Schnellgang und einem vorgebbaren Sicherheitsabstand entspricht. Die Aufgabe des zweiten Strahlungsdetektors besteht zumindest darin, eine Überprüfung der Position des Werkzeugträgers und der damit bewegungsgekoppelten Überwachungseinrichtung zu einem vorgebbaren Zeitpunkt während einer Bewegung des Werkzeugträgers in die Schließbewegungsrichtung zu ermöglichen. Da der zweite Strahlungsdetektor als Bestandteil der Überwachungseinrichtung der verglichen mit der Maschinensteuerung höheren Sicherheitskategorie zuzurechnen ist, kann aus der Kombination der Signale des ersten und zweiten Strahlungsdetektors eine sichere Aussage über die Position des Werkzeugträger abgeleitet werden, ohne dass zu diesem Zweck das Wegmesssystem der Maschinensteuerung in der höheren Sicherheitskategorie angesiedelt sein muss. Vielmehr ist es ausreichend, wenn die Überwachungseinrichtung zum Zeitpunkt der Bereitstellung des Prüfsignals von der Maschinensteuerung überprüfen kann, ob die von der Maschinensteuerung getroffene Annahme, dass das Werkzeug noch einen vorgebbaren Abstand zum Maschinenbett aufweist, auch tatsächlich erfüllt ist. Sofern eine Übereinstimmung zwischen der auf dem "unsicheren" Niveau der Maschinensteuerung getroffenen Annahme bezüglich der Position des Werkzeugträgers und der von der Überwachungseinrichtung auf "sicherem" Niveau ermittelten Istposition des Werkzeugträgers vorliegt, kann ein Weiterbetreiben der Umformeinrichtung vorgesehen sein. Andernfalls ist eine Ausgabe eines Abschaltsignals von der Überwachungseinrichtung an die der Antriebseinrichtung vorgeschaltete Trenneinrichtung vorgesehen, da das Vorliegen eines vorgebbaren Überwachungsfalls anzunehmen ist.

Hierzu ist die Überwachungseinrichtung für eine Bereitstellung des Abschaltsignals an die der Antriebseinrichtung vorgeschaltete Trenneinrichtung für die Fälle ausgebildet, dass der erste Strahlungsdetektor bei Eintreffen des Prüfsignals nicht mit Strahlen eines Strahlenbündels beaufschlagt ist und/oder der zweite Strahlungsdetektor bei Eintreffen des Prüfsignals mit Strahlen eines Strahlenbündels beaufschlagt ist. Die Bereitstellung des Abschaltsignals für diesen Fall beruht auf der Überlegung, dass der vorgebbare Sicherheitsabstand, den der zweite Strahlungsdetektors gegenüber dem ersten Strahlungsdetektor einnimmt, so bemessen ist, dass zum Zeitpunkt der Bereitstellung des Prüfsignals der Werkzeugträger und die damit bewegungsgekoppelte Überwachungseinrichtung derart gegenüber dem Maschinenbett positioniert ist, dass das Strahlenbündel, dessen Strahlen sowohl den ersten als auch den zweiten Strahlungsdetektor beaufschlagen können, nur den ersten Strahlungsdetektor beaufschlagen, während der zweite Strahlungsdetektor bereits vom Maschinenbett verdeckt wird und daher nicht von Strahlen beaufschlagt wird. Dabei ist die Anordnung der beiden Strahlungsdetektoren derart gewählt, dass dieser vorstehend beschriebene Zustand (erster Strahlungsdetektor strahlenbeaufschlagt, zweiter Strahlungsdetektor nicht strahlungsbeaufschlagt) nur innerhalb eines engen Positionsintervalls für eine tatsächliche Position des Werkzeugträgers und der damit gekoppelten Überwachungseinrichtung vorliegt. Sofern dieses Positionsintervall zum Zeitpunkt der Bereitstellung des Prüfsignals durch die Maschinensteuerung vom Werkzeugträger und der Überwachungseinrichtung noch nicht erreicht oder bereits überschritten wurde, muss von einer Fehlfunktion der Maschinensteuerung ausgegangen werden, so dass eine Abschaltung der Antriebseinrichtung durch entsprechende Ansteuerung der Trenneinrichtung stattfinden muss.

Die Aufgabe der Erfindung wird gemäß einem zweiten Aspekt durch ein Verfahren zum Betreiben einer Umformeinrichtung nach einem der Ansprüche 1 bis 7 gelöst. Hierbei sind die folgenden Schritte vorgesehen: Durchführen einer Annäherungsbewegung des Werkzeugträgers gegenüber dem Maschinenbett mit einer ersten Bewegungsgeschwindigkeit, Überwachung einer Strahlungsbeaufschlagung von mehreren Strahlungsdetektoren mittels der Überwachungseinrichtung, wobei ein erster Strahlungsdetektor längs einer Schließbewegungsrichtung des Werkzeugträgers mit einem Abstand von der Arbeitskante des Werkzeugs entfernt angeordnet ist, der einem Nachlaufweg des Werkzeugträgers bei Abschaltung der Antriebseinrichtung aus der ersten Bewegungsgeschwindigkeit entspricht, Ermitteln einer Position des Werkzeugträgers längs der Schließbewegungsrichtung durch die Maschinensteuerung und Bereitstellen eines Prüfsignals von der Maschinensteuerung an die Überwachungseinrichtung bei Erreichen einer vorgebbaren, von der Maschinensteuerung ermittelten Relativposition, Überwachung der Strahlungsbeaufschlagung der Strahlungsdetektoren, wobei ein zweiter Strahlungsdetektor längs der Schließbewegungsrichtung des Werkzeugträgers mit einem Abstand von der Arbeitskante des Werkzeugs entfernt angeordnet ist, der einer Summe des Nachlaufwegs des Werkzeugträgers bei Abschaltung der Antriebseinrichtung aus der ersten Bewegungsgeschwindigkeit und einem vorgebbaren Sicherheitsabstand entspricht, Bereitstellen des Abschaltsignals an die der Antriebseinrichtung vorgeschaltete Trenneinrichtung, wenn der erste Strahlungsdetektor zum Zeitpunkt der Bereitstellung des Prüfsignals nicht mit Strahlung des Strahlenbündels beaufschlagt ist und/oder wenn der zweite Strahlungsdetektor zum Zeitpunkt der Bereitstellung des Prüfsignals mit Strahlung des Strahlenbündels beaufschlagt ist.

In weiterer Ausgestaltung des Verfahren ist vorgesehen, dass vor der Bereitstellung des Prüfsignals ein Ausbleiben von Strahlen auf wenigstens einen der Strahlungsdetektoren zur Bereitstellung des Abschaltsignals an die der Antriebseinrichtung vorgeschaltete Trenneinrichtung führt, wobei der zweite Strahlungsdetektor nicht berücksichtigt wird. Sofern wenigstens einer der Strahlungsdetektoren vor der Bereitstellung des Prüfsignals keine Beaufschlagung mit Strahlen des zugeordneten Strahlenbündels detektieren kann, muss von einem Eingriff eines Benutzers in den Gefahrenbereich oder den Sicherheitsbereich ausgegangen werden, so dass eine schnellstmögliche Abbremsung der Schließbewegung des Werkzeugträgers erreicht werden muss, um eine Gefahr für den Bediener zu vermeiden.

In weiterer Ausgestaltung des Verfahren ist vorgesehen, dass nach Bereitstellung des Prüfsignals von der Maschinensteuerung an die Überwachungseinrichtung eine Abbremsung der Antriebseinrichtung auf eine zweite, geringere Bewegungsgeschwindigkeit erfolgt, wenn der erste Strahlungsdetektor zum Zeitpunkt der Bereitstellung des Prüfsignals mit Strahlung des Strahlenbündels beaufschlagt ist und wenn der zweite Strahlungsdetektor zum Zeitpunkt der Bereitstellung des Prüfsignals nicht mit Strahlung des Strahlenbündels beaufschlagt ist. Erfindungsgemäß wird das Prüfsignal von der Maschinensteuerung dann bereitgestellt, wenn die Maschinensteuerung anhand der ihr zur Verfügung stehenden, gemäß der Sicherheitskategorie der Maschinensteuerung und des zugehörigen Wegmesssystems "unsicheren" Informationen davon auszugehen hat, dass das Werkzeug zumindest noch um den Nachlaufweg entfernt von dem zu deformierenden Werkstück positioniert ist. Sofern diese Annahme der Maschinensteuerung von der Überwachungseinrichtung durch Abtastung des ersten und zweiten Strahlungsdetektors und Ermitteln eines erwartungsgemäßen Signalmusters bestätigt werden kann, wird eine Abbremsung des Werkzeugträgers von der ersten Bewegungsgeschwindigkeit auf die zweite Bewegungsgeschwindigkeit hervorgerufen, damit das Werkzeug bei Berührung des Werkstücks die zweite Bewegungsgeschwindigkeit, die für die Deformation des Werkstücks vorteilhaft ist, zuverlässig erreicht hat. Sofern das von der Überwachungseinrichtung ermittelte Signalmuster nicht erwartungsgemäß ist, da zum Zeitpunkt der Bereitstellung des Prüfsignals weder der erste noch der zweite Strahlungsdetektor mit Strahlen beaufschlagt sind oder zu diesem Zeitpunkt beide Strahlungsdetektoren mit Strahlen beaufschlagt sind oder nur der zweite Strahlungsdetektor mit Strahlen beaufschlagt ist, muss von einer Fehlfunktion der Maschinensteuerung ausgegangen werden, so dass eine Abschaltung der Antriebseinrichtung erfolgen muss.

In weiterer Ausgestaltung des Verfahren ist vorgesehen, dass mit dem Beginn der Abbremsung auf die zweite Bewegungsgeschwindigkeit eine Deaktivierung derjenigen Strahlungsdetektoren vorgenommen wird, die in einer gemeinsamen, quer zur Schließbewegungsrichtung ausgerichteten ersten Ebene mit dem ersten Strahlungsdetektor angeordnet sind. Die Deaktivierung der Strahlungsdetektoren wird auch als "Ausblendung" bezeichnet, da ab dem Zeitpunkt der Deaktivierung des jeweiligen Strahlungsdetektors von der Überwachungseinrichtung nicht mehr nachvollzogen wird, ob der Strahlungsdetektor mit Strahlung beaufschlagt ist oder nicht, da dies aus sicherheitstechnischen Überlegungen heraus für den weiteren Schließvorgang zwischen Werkzeugträger und Maschinenbett nicht mehr notwendig ist. Da der erste Strahlungsdetektor sowie weitere auf der gleichen Ebene angeordnete Strahlungsdetektoren unmittelbar nach dem Zeitpunkt der Bereitstellung des Prüfsignals vom Maschinenbett bzw. einem auf dem Maschinenbett aufliegenden Werkstück verdeckt werden, muss verhindert werden, dass durch die Unterbrechung der jeweils zugeordneten Strahlenbündel durch das Maschinenbett eine unerwünschte Abschaltung der Antriebseinrichtung erfolgt. Dies wird dadurch erreicht, dass die jeweiligen Strahlungsdetektoren nach der Durchführung der Überprüfung der Überwachungseinrichtung zum Zeitpunkt der Bereitstellung des Prüfsignals deaktiviert oder ausgeblendet werden.

In weiterer Ausgestaltung des Verfahren ist vorgesehen, dass mit dem Beginn der Abbremsung auf die zweite Bewegungsgeschwindigkeit wenigstens ein Strahlungsdetektor, der in einer parallel zur ersten Ebene angeordneten, zweiten Ebene angeordnet ist, die einen geringeren Abstand zur Arbeitskante des Werkzeugs als die erste Ebene aufweist, nach Ablauf einer vorgebbaren Zeitdauer deaktiviert wird. Der wenigstens eine auf der zweiten Ebene angeordnete Strahlungsdetektor dient zur Überwachung des Sicherheitsbereichs oder des Gefahrenbereichs nach dem Zeitpunkt der Bereitstellung des Prüfsignals durch die Maschinensteuerung. Da unmittelbar nach der Bereitstellung des Prüfsignals in jedem Fall eine Abbremsung des Werkzeugträgers vorgesehen ist, entweder um die Bearbeitung des Werkstücks vorzunehmen oder um die Umformeinrichtung in einen sicheren zustand zu bringen, sind die Anforderungen an die Überwachung des Sicherheitsbereichs und des Gefahrenbereich ab diesem Zeitpunkt niedriger, so dass eine zeitgesteuerte Überwachung durch den wenigstens einen auf der zweiten Ebene angeordneten Strahlungsdetektor, bei dem es sich insbesondere um einen im Sicherheitsbereich angeordneten und damit dem Gefahrenbereich vorgelagerten Strahlungsdetektor handeln kann, als ausreichend angesehen wird, um das erforderliche Sicherheitsniveau zu gewährleisten.

In weiterer Ausgestaltung des Verfahrens ist vorgesehen, dass nach der Bereitstellung des Prüfsignals keine Überwachung der jeweils deaktivierten Strahlungsdetektoren vorgenommen wird und lediglich ein Ausbleiben von Strahlen auf aktiven Strahlungsdetektoren zur Bereitstellung des Abschaltsignals an die der Antriebseinrichtung vorgeschaltete Trenneinrichtung führt.

In weiterer Ausgestaltung des Verfahrens ist vorgesehen, dass bei Erreichen der zweiten Bewegungsgeschwindigkeit eine Deaktivierung sämtlicher Strahlungsdetektoren vorgenommen wird. Die zweite Bewegungsgeschwindigkeit ist so gewählt, dass gemäß den derzeit zu beachtenden Sicherheitsvorschriften keine zusätzliche Überwachung des Gefahrenbereichs und/oder des Sicherheitsbereichs erforderlich ist. Exemplarisch beträgt die zweite Bewegungsgeschwindigkeit, die auch als "Schleichgang" bezeichnet wird, zwischen ca. 10mm/Sekunde und 20mm/Sekunde.

In weiterer Ausgestaltung des Verfahrens ist vorgesehen, dass die Ermittlung der vorgebbaren Relativposition, an der das Prüfsignal von der Maschinensteuerung ausgegeben wird, in einer niedrigeren Sicherheitskategorie gemäß einem vorgebbaren Sicherheitsstandard vorgenommen wird als die Überprüfung der Strahlungsbeaufschlagung des ersten und zweiten Strahlungsdetektors der Überwachungseinrichtung, die gemäß einer höheren Sicherheitskategorie erfolgt. Damit erfolgt die Ausgabe des Prüfsignals anhand von Informationen, die auf die weniger sichere Maschinensteuerung zurückzuführen sind und die daher mit einer höheren Wahrscheinlichkeit fehlerbehaftet sind als das Ergebnis der Überprüfung der tatsächlichen Position des Werkzeugträgers und des daran angebrachten Werkzeugs mittels der ersten und zweiten Strahlungsdetektoren, die von der Überwachungseinrichtung überprüft werden. Trotz dieser Vorgehensweise ist gewährleistet, dass die Nutzung des "unsicheren" Positionssignals der Maschinensteuerung in keinem Fall zu einem unsicheren Zustand der Umformeinrichtung führt, wie nachstehend ausgeführt wird.

Sofern das "unsichere" Positionssignal positiv falsch sein sollte, die Maschinensteuerung also von einem geringeren Abstand zwischen Werkzeugträger und Maschinenbett ausgeht, als dies tatsächlich der Fall ist, wird das Prüfsignal zu einem Zeitpunkt ausgegeben, zu dem der zweite Strahlungsdetektors noch nicht vom Maschinenbett abgedeckt ist. Somit ergibt die Überprüfung der Überwachungseinrichtung zu diesem Zeitpunkt, dass sowohl der erste als auch der zweite Strahlungsdetektor von Strahlen des Strahlenbündels beaufschlagt sind. Daraus resultiert dann bei der Bereitstellung des Prüfsignals eine Abschaltung der Antriebseinrichtung durch ein Abschaltsignal von der Überwachungseinrichtung an die der Antriebseinrichtung vorgeschaltete Trenneinrichtung, da die Strahlungsdetektoren der Überwachungseinrichtung bei Eintreffen des Prüfsignals nicht das erwartete Signalmuster bereitstellen.

Sofern das "unsichere" Positionssignal negativ falsch sein sollte, die Maschinensteuerung also von einem größeren Abstand zwischen Werkzeugträger und Maschinenbett ausgeht, als dies tatsächlich der Fall ist, findet bereits vor der Bereitstellung des Prüfsignals eine Abdeckung des ersten Strahlungsdetektors statt. Hieraus folgt unmittelbar eine Abschaltung der Antriebseinrichtung durch ein Abschaltsignal von der Überwachungseinrichtung an die der Antriebseinrichtung vorgeschaltete Trenneinrichtung.

Lediglich für den Fall, dass die Maschinensteuerung die Position des Werkzeugträgers gegenüber dem Maschinenbett korrekt ermittelt und somit auch das Prüfsignal zu einem Zeitpunkt bereitstellt, zu dem der erste Strahlungsdetektor noch nicht vom Maschinenbett abdeckt ist, der zweite Strahlungsdetektor hingegen schon vom Maschinenbett abgedeckt ist, wird das Signalmuster der beiden Strahlungsdetektoren von der Überwachungseinrichtung als korrekt bewertet und die Umformeinrichtung wird auf die zweite Bewegungsgeschwindigkeit abgebremst, um die Deformation des Werkstücks vornehmen zu können.

Eine vorteilhafte Ausführungsform der Erfindung ist in der Zeichnung dargestellt. Dabei zeigt:
- Figur 1: eine schematische Darstellung einer Gesenkbiegemaschine mit einer Überwachungseinrichtung und einer endseitig an einer Matrize angebrachten Sicherungseinrichtung,
- Figur 2: eine Seitenansicht der Sicherungseinrichtung gemäß Figur 1,
- Figur 3: eine Seitenansicht einer ersten Ausführungsform einer Empfangseinrichtung der Überwachungseinrichtung und
- Figur 4: eine Seitenansicht einer zweiten Ausführungsform einer Empfangseinrichtung der Überwachungseinrichtung.

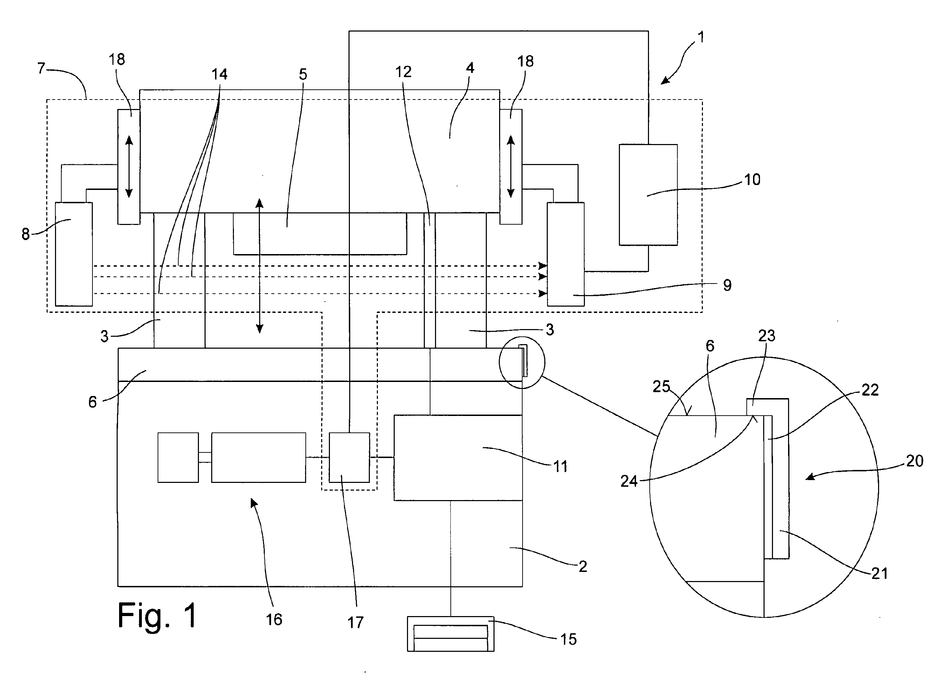

Eine gemäß der Figur 1 exemplarisch als Gesenkbiegemaschine 1 ausgebildete Umformmaschine umfasst ein Maschinenbett 2, an dem zwei Führungsstangen 3 angebracht sind, die für eine linearbewegliche Lagerung eines Werkzeugträgers 4 ausgebildet sind. Der Werkzeugträger 4 kann linear längs der Führungsstangen 3 bewegt werden, um einen als Werkzeug dienenden Stempel 5 gegenüber einer Matrize 6 zu bewegen. Bei einer Bewegung des Stempels 5 in eine Schließbewegungsrichtung wird ein Spalt zwischen dem Stempel 5 und der Matrize 6 verkleiner, so dass eine Deformation eines nicht dargestellten, in den Spalt zwischen Stempel 5 und Matrize 6 einschiebbaren Werkstücks ermöglicht wird.

Die Gesenkbiegemaschine 1 ist mit einer exemplarisch aus mehreren Komponenten aufgebauten Überwachungseinrichtung 7 ausgestattet, die dazu vorgesehen ist, die Verletzungsgefahr durch die Gesenkbiegemaschine 1 zu minimieren und einen raschen und störungsfreien Bearbeitungsablauf für die zu bearbeitenden Werkstücke zu gewährleisten. Exemplarisch umfasst die Überwachungseinrichtung 7 ein am Werkzeugträger 4 angebrachtes Lichtgitter, dessen Detektionsstrahlen 14 parallel zu einer längsten Kante der Matrize 6 ausgerichtet sind und die zwischen einer Sendeeinrichtung 8 und einer Empfangseinrichtung 9 verlaufen. Die Empfangseinrichtung 9 des Lichtgitters stellt jeweils elektrische Schaltsignale an eine Auswerteeinrichtung 10 bereit, wenn Detektionsstrahlen 14 des Lichtgitters unterbrochen werden, wobei die Auswerteeinrichtung 10 eine weitere Komponente der Überwachungseinrichtung 7 bildet.

Die Gesenkbiegemaschine 1 umfasst eine Maschinensteuerung 11, die mit einem Wegmesssystem 12 und mit einem Fußschalter 15 jeweils elektrisch gekoppelt ist. Die Maschinensteuerung 11 kann exemplarisch als numerische Computersteuerung (CNC-Steuerung, computer numerical control) ausgebildet sein. Die Maschinensteuerung 11 ermöglicht die Eingabe von Informationen über die Geometrien des Stempels 5, der Matrize 6 und des nicht dargestellten Werkstücks sowie über die gewünschte Deformation des Werkstücks durch einen Benutzer und ermittelt daraus den Bewegungsablauf für den Stempel 5 gegenüber der Matrize 6. Der Fußschalter 15 ermöglicht die Auslösung des Bewegungsablaufs durch einen Bediener.

Für die Einleitung einer Bewegung auf den Werkzeugträger 4 und den daran aufgenommenen Stempel 5 umfasst die Gesenkbiegemaschine 1 exemplarisch eine elektrisch betreibbare Hydraulikpumpe 16, die einen Ölstrom an nicht dargestellte, den Führungsstangen 3 zugeordnete Hydraulikzylinder bereitstellen kann. Für die Bereitstellung der hierzu notwendigen elektrischen Energie ist die Hydraulikpumpe 16 elektrisch mit der Maschinensteuerung 11 verbunden. Für einen sicheren Betrieb der Hydraulikpumpe 16 ist in die elektrische Verbindung zur Maschinensteuerung 11 eine Trenneinrichtung 17 eingeschleift, die von der Auswerteeinrichtung 10 angesteuert werden kann und die ebenfalls eine Komponente der Überwachungseinrichtung 7 bildet.

Um eine Anpassung der Position des Lichtgitters, also der Sendeeinrichtung 8 und der Empfangseinrichtung 9, an unterschiedliche Stempel 5 zu ermöglichen, sind die Sendeeinrichtung 8 und die Empfangseinrichtung 9 jeweils linearbeweglich mittels Führungsmitteln 18 am Werkzeugträger 4 aufgenommen. Vorzugsweise sind die Führungsmittel 18 für die Sendeeinrichtung 8 und die Empfangseinrichtung 9 derart miteinander bewegungsgekoppelt, dass eine synchrone Verstellung der beiden Führungsmittel 18 gewährleistet ist.

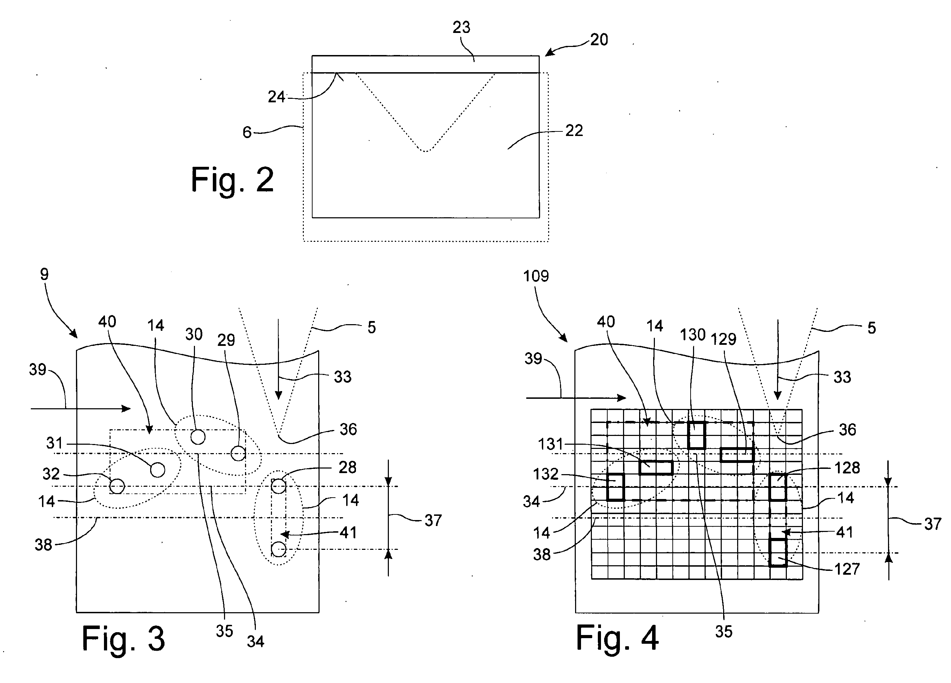

Für die Durchführung eines Bewegungsablaufs für den Werkzeugträger 4 und den daran angebrachten Stempel 5 unter Aufsicht durch die Überwachungseinrichtung 7 ist es vorgesehen, einen unterbrochenen untersten Detektionsstrahl 14 sowie ununterbrochene, darüberliegende Detektionsstrahlen 14 bei Erreichen einer vorgebbaren Relativposition des Stempels 5 gegenüber der am Maschinenbett 2 angebrachten Matrize 6 und dem nicht dargestellten, auf der Matrize 6 aufliegenden Werkstück zu ermitteln. Sofern die Detektionsstrahlen 14 in der vorstehend beschriebenen Weise auf die Empfangseinrichtung 9 auftreffen, kann von einer korrekten Positionierung des Stempels 5 gegenüber der Matrize 6 ausgegangen werden, die mit Hilfe der Überwachungseinrichtung überprüft wird. Die Matrize 6 weist eine in der Figur 2 näher dargestellte, exemplarisch V-förmig ausgeführte, nutartige Vertiefung 19 auf, die an sich einen freien Strahlverlauf für den untersten Detektionsstrahl 14 bis zum Erreichen des Nutgrunds gewährleistet. Um dennoch in der gewünschten vorgebbaren Relativposition des Stempels 5 gegenüber der Matrize 6 die Unterbrechung des untersten Detektionsstrahls 14 gewährleisten zu können, wird eine Sicherungseinrichtung 10 eingesetzt, die an einer Stirnseite der Matrize 6 angebracht wird und die den untersten Detektionsstrahl 14 der Überwachungseinrichtung 7 bei einer Annäherung des Stempels 5 an die Matrize 6 in der vorgebbaren Relativposition unterbricht.

Wie aus der Detailvergrößerung der Figur 1 und aus der Figur 2 hervorgeht, umfasst die Sicherungseinrichtung 20 einen Grundkörper 21, an dem wenigstens eine exemplarisch als separate Magnetfolie ausgebildete Hafteinrichtung 22 für eine zeitweilige, werkzeuglos lösbare Anhaftung an der Matrize 6 angeordnet ist. Somit kann die Sicherungseinrichtung 20 in einfacher Weise an der typischerweise aus Stahl hergestellten Matrize 6 angehaftet werden. Der Grundkörper 21 und die Hafteinrichtung 22 sind aus einem lichtundurchlässigen Material hergestellt, so dass sie auch eine Sperreinrichtung für den Detektionsstrahl 14 bilden.

Ferner ist an dem Grundkörper 21 eine erhaben von der Hafteinrichtung 22 abragende Haltenase 23 ausgebildet, die exemplarisch für eine formschlüssige Festlegung der Sicherungseinrichtung 20 gegenüber den in vertikaler Richtung nach unten auf die Sicherungseinrichtung 20 einwirkenden Gewichtskräften ausgebildet ist. Zudem gewährleistet die Haltenase 23 auch bei Auflegen eines Werkstücks auf die Matrize 6 sowie beim Auftreten von Schwingungen, dass die Sicherungseinrichtung 20 nicht nach unten verschoben wird.

Die Haltenase 23 der in den Figuren 1 und 2 dargestellten Sicherungseinrichtung 20 ist derart ausgebildet, dass sie eine exemplarisch eben ausgebildete Anlagefläche 24 aufweist, die an eine exemplarisch ebenfalls zumindest abschnittsweise eben ausgebildete Außenoberfläche 25 der Matrize 6 angepasst ist. Durch die korrespondierende Gestaltung der aneinander anliegenden Flächen kann eine ausreichend exakte Ausrichtung der Sicherungseinrichtung 20 gegenüber der Matrize 6 gewährleistet werden, so dass der unterste Detektionsstrahl 14 zuverlässig unterbrochen wird.

Anhand der in Figur 3 dargestellten Seitenansicht einer ersten Ausführungsform der Empfangseinrichtung der Überwachungseinrichtung ist erkennbar, wie die einzelnen Strahlungsdetektoren 27 bis 32, bei denen es sich beispielsweise um diskret ausgebildete Fotodioden handeln kann, angeordnet sind und wie diese exemplarisch von entsprechenden Detektionsstrahlen 14 beleuchtet werden können. Exemplarisch werden jeweils zwei der Strahlungsdetektoren 27 bis 32 von einem Detektionsstrahl 14 beleuchtet. Dabei sind für die Funktion der Überwachungseinrichtung 7 die beiden ersten und zweiten Strahlungsdetektoren 27 und 28 von besonderer Bedeutung. Der zweite Strahlungsdetektor 27 liegt in der Schließbewegungsrichtung 33 am weitesten entfernt von einer schematisch angedeuteten Arbeitskante 36 eines V-förmig ausgebildeten Stempels 5. Dabei wird die Position der Sendeeinrichtung 8 und der Empfangseinrichtung 9 durch entsprechende Verschiebung mit den Führungsmitteln 18 längs der Schließbewegungsrichtung 33 so eingestellt, dass ein Abstand des ersten Strahlungsdetektors 28 von der Arbeitskante 36 in Schließbewegungsrichtung 33 zumindest dem Nachlaufweg des Werkzeugträgers 4 entspricht. Der Sicherheitsabstand 37 zwischen den ersten und dem zweiten Strahlungsdetektoren 27, 28 ist so gewählt, dass der Detektionsstrahl 14 nicht mehr auf den zweiten Strahlungsdetektor 27 trifft, wenn der erste Strahlungsdetektor 28 kurz vor einer als waagerechten Linie in der Figur 3 angedeuteten Werkstückoberfläche 38 positioniert ist. Ferner ist in der Figur 3 eine mögliche Eingriffsrichtung 39 eines Benutzers in die von den Strahlungsdetektoren 27 bis 32 überwachten Sicherheits- und Gefahrenzonen 40, 41 dargestellt. Dabei stellt die Gefahrenzone 41 denjenigen Bereich dar, der während der Schließbewegung zwischen Stempel 5 und Matrize 6 vom Stempel 5 überfahren wird und in dem eine Quetschgefahr besteht. Die Sicherheitszone 40 ist derjenige der Gefahrenzone 41 vorgelagerte Raumbereich, in dem ein Eingriff eines Benutzers erfasst werden soll, um ein zuverlässiges Anhalten des Stempels 5 zu gewährleisten, bevor der Benutzer mit seinem Körperteil in gefährdender Weise in die Gefahrenzone 41 eindringt.

Bei der in Figur 4 dargestellten Ausführungsform einer Empfangseinrichtung 109 wird anstelle der als diskrete Fotodioden ausgebildeten Strahlungsdetektoren gemäß der Ausführungsform der Figur 3 eine Detektormatrix aus rasterartig in einer Rechteckform angeordneten Detektorzellen eingesetzt, bei der es sich exemplarisch um einen CCD-Sensor (charge coupled device) handelt. Dabei ist exemplarisch vorgesehen, dass jeweils mit zwei aneinandergrenzenden Detektorzellen die Strahlungsdetektoren 127 bis 132 gebildet werden. Eine derartige Detektormatrix ermöglicht auch eine Anpassung der Position der zu Überwachungszwecken eingesetzten Detektorzellen an die jeweiligen Randbedingungen der Werkstückbearbeitung. Ferner kann vorgesehen werden, dass die Detektorzellen beispielsweise bei vorschreitender Werkstückbearbeitung in gleicher Weise wie die Strahlungsdetektoren 27 bis 32 gemäß der Ausführungsform in Figur 3 deaktiviert werden oder in einer abweichenden Weise, die gegebenenfalls eine verbesserte Anpassung auf den Bearbeitungsvorgang ermöglicht.

Die Gesenkbiegemaschine 1 kann exemplarisch wie folgt betrieben werden: zunächst erfolgt in einer Ruhestellung des Werkzeugträgers 4, in der dieser einen maximalen Abstand zum Maschinenbett 2 und der daran angebrachten Matrize 6 einnimmt, ein Selbsttest des Lichtgitters. Hierbei wird überprüft, ob die Detektorstrahlen 14 beim Auftreffen auf die Strahlungsdetektoren 27 bis 32 entsprechende Signale auslösen. Ferner erfolgt eine Positionierung der Sende- und Empfangseinrichtung 8,9 des Lichtgitters mittels der Führungsmittel 18 an den am Werkzeugträger 4 aufgenommenen Stempel 5. Dabei findet eine Geometrie des Stempels 5 ebenso Berücksichtigung wie der Nachlaufweg des Werkzeugträgers 4, so dass der erste Strahlungsdetektor 28 derart gegenüber der Arbeitskante 36 des Stempels 5 angeordnet ist, dass der Abstand zwischen erstem Strahlungsdetektor 28 und der Arbeitskante 36 zumindest dem Nachlaufweg entspricht. Anschließend kann der Benutzer nach Auflegen des Werkstücks auf die Matrize 6 durch Betätigen des Fußschalters 15 die Bearbeitung auslösen. Hierzu ist ein vorgebbarer Bewegungsablauf für den Stempel 5 vorgesehen, der exemplarisch die folgenden Schritte umfassen kann. In einem ersten Schritt nach Betätigung des Fußschalters 15 wird der Werkzeugträger 4 auf eine erste Bewegungsgeschwindigkeit beschleunigt, die auch als "Schnellgang" oder "Eilgang" bezeichnet wird. Bei dieser schnellen Bewegung findet eine Überwachung aller Strahlungsdetektoren mit Ausnahme des zweiten Strahlungsdetektors 27 statt. Sofern bei der Annäherung des Werkzeugträgers 4 an die Matrize 6 keine Unterbrechung zumindest eines der Detektionsstrahlen 14 detektiert wird, ermittelt die Maschinensteuerung 11 anhand der Positionssignale des Wegmesssystems 12 und in Kenntnis der Position des Lichtgitters gegenüber dem Werkzeugträger einen Zeitpunkt, zu dem der Detektionsstrahl 14 auf den ersten Strahlungsdetektor 28 gerade noch nicht vom Werkstück unterbrochen wird. Zu diesem von der Maschinensteuerung 11 ermittelten Zeitpunkt wird ein Prüfsignal an die Überwachungseinrichtung 7 ausgegeben. Die Überwachungseinrichtung 7 prüft bei Eintreffen des Prüfsignals, ob zum einen der Detektionsstrahl 14 noch auf den ersten Strahlungsdetektor 28 trifft und ob zum anderen der zweite Strahlungsdetektor 27 nicht mehr vom Detektionsstrahl 14 beaufschlagt wird. Nur für diesen Fall, der einer Positionierung der Arbeitskante 36 des Stempels 5 in einem Abstand zur Werkstückoberfläche 38, der dem Nachlaufweg des Werkstückhalters 4 entspricht, stellt die Überwachungseinrichtung eine korrekte Funktion der Gesenkbiegemaschine 1 fest und leitet eine Abbremsung auf eine zweite Bewegungsgeschwindigkeit ein. In allen andere Fällen, wenn also beispielsweise beide Strahlungsdetektoren 27, 28 noch vom Detektionsstrahl 14 beaufschlagt sind oder wenn keiner der beiden Strahlungsdetektoren 27, 28 vom Detektionsstrahl beaufschlagt ist oder wenn nur der zweite Strahlungsdetektor 27 vom Detektionsstrahl beaufschlagt ist, erkennt die Überwachungseinrichtung 11 eine Fehlfunktion und leitet eine schnelle Abbremsung des Werkzeugträgers 4 bis zu dessen Stillstand ein.

Sofern die Überwachungseinrichtung eine korrekte Funktion der Gesenkbiegemaschine 1 festgestellt hat, werden die beiden in einer gemeinsamen ersten Ebene 34 angeordneten Strahlungsdetektoren 28 und 32 sowie der Strahlungsdetektor 31 ausgeblendet. Ferner wird ein Zeitglied für die Ausblendung des in einer zweiten Ebene 35 angeordneten Strahlungsdetektors 29 gestartet, wobei die Zeit bis zur Ausblendung so bemessen ist, dass keine Unterbrechung des Detektionsstrahls 14 auf diesen Strahlungsdetektor 31 durch das Werkstück zu erwarten ist. Bei Unterschreiten einer vorgebbaren Bewegungsgeschwindigkeit, die auch als "Schleichgang" bezeichnet wird, kann nunmehr auch der letzte Strahlungsdetektor 30 ausgeblendet werden. Ab diesem Zeitpunkt ist davon auszugehen, dass der Spalt zwischen Stempel 5 und Werkstück vollständig geschlossen ist und somit keine unmittelbare Quetschgefahr mehr besteht. Ferner wird bei der zweiten, langsamen Bearbeitungsgeschwindigkeit davon ausgegangen, dass hierbei ohnehin nur ein geringes Gefahrenpotential vom der Gesenkbiegemaschine 1 ausgeht.

## Patentansprüche

1. Umformeinrichtung mit einem Maschinenbett (2), einem relativbeweglich am Maschinenbett (2) aufgenommenen Werkzeugträger (4) zur Aufnahme eines Werkzeugs (5), einer mit dem Werkzeugträger (4) gekoppelten Antriebseinrichtung (16), einer Maschinensteuerung (11) zur Ansteuerung der Antriebseinrichtung (16) und einer Überwachungseinrichtung (7), die zur Überwachung von Bewegungen des Werkzeugträgers (4) und zur Bereitstellung eines Abschaltsignals an eine der Antriebseinrichtung (16) vorgeschaltete Trenneinrichtung (17) bei Auftreten eines vorgebbaren Überwachungsfalls ausgebildet ist, wobei die Überwachungseinrichtung wenigstens eine Strahlungsquelle (8) und mehrere der Strahlungsquelle (8) gegenüberliegend angeordnete Strahlungsdetektoren (27 bis 32; 127 bis 132) umfasst und wobei zumindest ein Teil der von der Strahlungsquelle (8) ausgehenden Strahlenbündel (14) längs einer Arbeitskante (36) des Werkzeugs (5) ausgerichtet ist, wobei die Überwachungseinrichtung (7) dazu ausgebildet ist, bei einer Annäherungsbewegung des Werkzeugträgers (4) gegenüber dem Maschinenbett (2) mit einer ersten Bewegungsgeschwindigkeit eine Überwachung einer Strahlungsbeaufschlagung von mehreren Strahlungsdetektoren (27 bis 32; 127 bis 132) mittels der Überwachungseinrichtung (7) vorzunehmen, wobei ein erster Strahlungsdetektor (28; 128) längs einer Schließbewegungsrichtung (33) des Werkzeugträgers (4) mit einem Abstand von der Arbeitskante (36) des Werkzeugs (5) entfernt angeordnet ist, der einem Nachlaufweg des Werkzeugträgers (4) bei Abschaltung der Antriebseinrichtung (16) aus der ersten Bewegungsgeschwindigkeit entspricht, und eine Position des Werkzeugträgers (4) längs der Schließbewegungsrichtung (33) durch die Maschinensteuerung (11) zu ermitteln und ein Prüfsignal von der Maschinensteuerung (11) an die Überwachungseinrichtung (7) bei Erreichen einer vorgebbaren, von der Maschinensteuerung (11) ermittelten Relativposition bereitzustellen sowie eine Strahlungsbeaufschlagung der Strahlungsdetektoren (27 bis 32; 127 bis 132) zu überwachen, wobei ein zweiter Strahlungsdetektor (27; 127) längs der Schließbewegungsrichtung (33) des Werkzeugträgers (4) mit einem Abstand von der Arbeitskante (36) des Werkzeugs (5) entfernt angeordnet ist, der einer Summe des Nachlaufwegs des Werkzeugträgers (4) bei Abschaltung der Antriebseinrichtung (16) aus der ersten Bewegungsgeschwindigkeit und einem vorgebbaren Sicherheitsabstand entspricht, **dadurch gekennzeichnet, dass** die Überwachungseinrichtung dazu ausgebildet ist, das Abschaltsignal an die der Antriebseinrichtung (16) vorgeschaltete Trenneinrichtung (16) bereitzustellen, wenn der erste Strahlungsdetektor (28; 128) zum Zeitpunkt der Bereitstellung des Prüfsignals nicht mit Strahlung des Strahlenbündels (14) beaufschlagt ist und/oder wenn der zweite Strahlungsdetektor (27; 127) zum Zeitpunkt der Bereitstellung des Prüfsignals mit Strahlung des Strahlenbündels (14) beaufschlagt ist.

2. Umformeinrichtung nach Anspruch 1, **dadurch gekennzeichnet, dass** die Maschinensteuerung (11) gemäß einer ersten Sicherheitskategorie eines Sicherheitsstandards ausgebildet ist, wobei die Überwachungseinrichtung (7) und die Trenneinrichtung (17) ein sicheres Arbeitssystem bilden, das gemäß einer zweiten Sicherheitskategorie des Sicherheitsstandards ausgebildet ist, und wobei die zweite Sicherheitskategorie auf einem höheren Niveau als die erste Sicherheitskategorie innerhalb des Sicherheitsstandards angesiedelt ist.

3. Umformeinrichtung nach Anspruch 1 oder 2, **dadurch gekennzeichnet, dass** die Maschinensteuerung (11) ein Wegmesssystem (12) für eine Ermittlung einer Relativposition des Werkzeugträgers (4) gegenüber dem Maschinenbett (2) umfasst und zur Bereitstellung eines Prüfsignals bei Erreichen einer vorgebbaren Relativposition während eines Annäherungsvorgangs des Werkzeugträgers (4) an das Maschinenbett (2) ausgebildet ist.

4. Umformeinrichtung nach Anspruch 1, 2 oder 3, **dadurch gekennzeichnet, dass** die der Strahlungsquelle (8) gegenüberliegend angeordneten Strahlungsdetektoren (27 bis 32; 127 bis 132) der Überwachungseinrichtung (7), die zur Erfassung der längs der Arbeitskante (36) des Werkzeugs (5) ausgerichteten Strahlenbündel (14) ausgebildet sind, jeweils wenigstens paarweise zur Erfassung eines Strahlenbündels (14) eingerichtet sind.

5. Umformeinrichtung nach Anspruch 1, 2, 3 oder 4, **dadurch gekennzeichnet, dass** ein erster Strahlungsdetektor (27; 127) längs einer Schließbewegungsrichtung (33) des Werkzeugträgers (4) mit einem Abstand von der Arbeitskante (36) des Werkzeugs (5) entfernt angeordnet ist, der zumindest einem Nachlaufweg des Werkzeugträgers (4) bei Abschaltung der Antriebseinrichtung (16) aus einer ersten Bewegungsgeschwindigkeit, insbesondere einem Schnellgang, entspricht.

6. Umformeinrichtung nach Anspruch 5, **dadurch gekennzeichnet, dass** ein zweiter Strahlungsdetektor (27; 127) längs der Schließbewegungsrichtung (33) des Werkzeugträgers (4) mit einem Abstand von der Arbeitskante (4) des Werkzeugs (5) entfernt angeordnet ist, der zumindest einer Summe des Nachlaufwegs des Werkzeugträgers (4) bei Abschaltung der Antriebseinrichtung (16) aus dem Schnellgang und einem vorgebbaren Sicherheitsabstand entspricht.

7. Umformeinrichtung nach Anspruch 6, **dadurch gekennzeichnet, dass** die Überwachungseinrichtung (7) für eine Bereitstellung des Abschaltsignals an die der Antriebseinrichtung (16) vorgeschaltete Trenneinrichtung (17) ausgebildet ist, wenn der erste Strahlungsdetektor (28; 128) bei Eintreffen des Prüfsignals nicht mit Strahlen eines Strahlenbündels (14) beaufschlagt ist und/oder wenn der zweite Strahlungsdetektor (27; 127) bei Eintreffen des Prüfsignals mit Strahlen eines Strahlenbündels (14) beaufschlagt ist.

8. Verfahren zum Betreiben einer Umformeinrichtung (1) nach einem der vorhergehenden Ansprüche, **gekennzeichnet durch** die Schritte: Durchführen einer Annäherungsbewegung des Werkzeugträgers (4) gegenüber dem Maschinenbett (2) mit einer ersten Bewegungsgeschwindigkeit, Überwachung einer Strahlungsbeaufschlagung von mehreren Strahlungsdetektoren (27 bis 32; 127 bis 132) mittels der Überwachungseinrichtung (7), wobei ein erster Strahlungsdetektor (28; 128) längs einer Schließbewegungsrichtung (33) des Werkzeugträgers (4) mit einem Abstand von der Arbeitskante (36) des Werkzeugs (5) entfernt angeordnet ist, der einem Nachlaufweg des Werkzeugträgers (4) bei Abschaltung der Antriebseinrichtung (16) aus der ersten Bewegungsgeschwindigkeit entspricht, Ermitteln einer Position des Werkzeugträgers (4) längs der Schließbewegungsrichtung (33) durch die Maschinensteuerung (11) und Bereitstellen eines Prüfsignals von der Maschinensteuerung (11) an die Überwachungseinrichtung (7) bei Erreichen einer vorgebbaren, von der Maschinensteuerung (11) ermittelten Relativposition, Überwachung der Strahlungsbeaufschlagung der Strahlungsdetektoren (27 bis 32; 127 bis 132), wobei ein zweiter Strahlungsdetektor (27; 127) längs der Schließbewegungsrichtung (33) des Werkzeugträgers (4) mit einem Abstand von der Arbeitskante (36) des Werkzeugs (5) entfernt angeordnet ist, der einer Summe des Nachlaufwegs des Werkzeugträgers (4) bei Abschaltung der Antriebseinrichtung (16) aus der ersten Bewegungsgeschwindigkeit und einem vorgebbaren Sicherheitsabstand entspricht, Bereitstellen des Abschaltsignals an die der Antriebseinrichtung (16) vorgeschaltete Trenneinrichtung (16), wenn der erste Strahlungsdetektor (28; 128) zum Zeitpunkt der Bereitstellung des Prüfsignals nicht mit Strahlung des Strahlenbündels (14) beaufschlagt ist und/oder wenn der zweite Strahlungsdetektor (27; 127) zum Zeitpunkt der Bereitstellung des Prüfsignals mit Strahlung des Strahlenbündels (14) beaufschlagt ist.

9. Verfahren zum Betreiben einer Umformeinrichtung (1) nach Anspruch 8, **dadurch gekennzeichnet, dass** vor der Bereitstellung des Prüfsignals ein Ausbleiben von Strahlen auf wenigstens einen der Strahlungsdetektoren (27 bis 32; 127 bis 132) zur Bereitstellung des Abschaltsignals an die der Antriebseinrichtung (16) vorgeschaltete Trenneinrichtung (17) führt, wobei der zweite Strahlungsdetektor (27; 127) nicht berücksichtigt wird.

10. Verfahren zum Betreiben einer Umformeinrichtung (1) nach Anspruch 8 oder 9, **dadurch gekennzeichnet, dass** nach Bereitstellung des Prüfsignals von der Maschinensteuerung (11) an die Überwachungseinrichtung (7) eine Abbremsung der Antriebseinrichtung (16) auf eine zweite, geringere Bewegungsgeschwindigkeit erfolgt, wenn der erste Strahlungsdetektor (28; 128) zum Zeitpunkt der Bereitstellung des Prüfsignals mit Strahlung des Strahlenbündels (14) beaufschlagt ist und wenn der zweite Strahlungsdetektor (27; 127) zum Zeitpunkt der Bereitstellung des Prüfsignals nicht mit Strahlung des Strahlenbündels (14) beaufschlagt ist.

11. Verfahren zum Betreiben einer Umformeinrichtung (1) nach Anspruch 10, **dadurch gekennzeichnet, dass** mit dem Beginn der Abbremsung auf die zweite Bewegungsgeschwindigkeit eine Deaktivierung derjenigen Strahlungsdetektoren (32; 132) vorgenommen wird, die in einer gemeinsamen, quer zur Schließbewegungsrichtung (33) ausgerichteten ersten Ebene (34) mit dem ersten Strahlungsdetektor (28; 128) angeordnet sind.

12. Verfahren zum Betreiben einer Umformeinrichtung (1) nach Anspruch 10 oder 11, **dadurch gekennzeichnet, dass** mit dem Beginn der Abbremsung auf die zweite Bewegungsgeschwindigkeit wenigstens ein Strahlungsdetektor (29), der in einer parallel zur ersten Ebene (34) angeordneten, zweiten Ebene (35) angeordnet ist, die einen geringeren Abstand zur Arbeitskante (36) des Werkzeugs als die erste Ebene (34) aufweist, nach Ablauf einer vorgebbaren Zeitdauer deaktiviert wird.

13. Verfahren zum Betreiben einer Umformeinrichtung (1) nach Anspruch 12, **dadurch gekennzeichnet, dass** nach der Bereitstellung des Prüfsignals keine Überwachung der jeweils deaktivierten Strahlungsdetektoren (27, 32; 127, 132) vorgenommen wird und lediglich ein Ausbleiben von Strahlen auf aktiven Strahlungsdetektoren (29, 30, 31; 129, 130 131) zur Bereitstellung des Abschaltsignals an die der Antriebseinrichtung (16) vorgeschaltete Trenneinrichtung (17) führt.

14. Verfahren zum Betreiben einer Umformeinrichtung (1) nach Anspruch 10, 11, 12 oder 13, **dadurch gekennzeichnet, dass** bei Erreichen der zweiten Bewegungsgeschwindigkeit eine Deaktivierung sämtlicher Strahlungsdetektoren (27 bis 32; 127 bis 132) vorgenommen wird.

15. Verfahren zum Betreiben einer Umformeinrichtung (1) nach einem der Ansprüche 10 bis 14, **dadurch gekennzeichnet, dass** die Ermittlung der vorgebbaren Relativposition, an der das Prüfsignal von der Maschinensteuerung (11) ausgegeben wird, in einer niedrigeren Sicherheitskategorie gemäß einem vorgebbaren Sicherheitsstandard vorgenommen wird als die Überprüfung der Strahlüngsbeaufschlagung des ersten und zweiten Strahlungsdetektors (27, 28; 127, 128) der Überwachungseinrichtung (7), die gemäß einer höheren Sicherheitskategorie erfolgt.

## Claims

1. Forming device comprising a machine bed (2), a tool carrier (4) mounted for relative movement on the machine bed (2) for the accommodation of a tool (5), a drive device (16) coupled to the tool carrier (4), a machine control (11) for controlling the drive device (16) and a monitoring device (17), which is designed for monitoring movements of the tool carrier (4) and for providing a shut-down signal to a disconnecting device (17) provided upstream of the drive device (16) on the occurrence of a presettable monitoring case, wherein the monitoring device (17) comprises at least one radiation source (8) and a plurality of radiation detectors (27 to 32; 127 to 132) arranged opposite the radiation source (8), and wherein at least a part of the beams of rays (14) emitted by the radiation source (8) is oriented along a working edge (36) of the tool (5), wherein the monitoring device (7) is designed to monitor the application of rays to the plurality of radiation detectors (27 to 32; 127 to 132) when the tool carrier (4) approaches the machine bed (2) with a first speed of movement, a first radiation detector (28; 128) being arranged along a closing movement direction (33) of the tool carrier (4) at a distance from the working edge (36) of the tool (5) which corresponds to a stopping distance of the tool carrier (4) when the drive device (16) is shut down from the first speed of movement, and wherein the monitoring device (7) is designed to determine a position of the tool carrier (4) along the closing movement direction (33) by means of the machine control (11) and to provide a test signal from the machine control (11) to the monitoring device (7) when a presettable relative position determined by the machine control (11) is reached, and to monitor an application of radiation to the radiation detectors (27 to 32; 127 to 132), a second radiation detector (27; 127) being arranged along the closing movement direction (33) of the tool carrier (4) at a distance from the working edge (36) of the tool (5) which corresponds to a sum of the stopping distance of the tool carrier (4) when the drive device (16) is shut down from the first speed of movement and a presettable safety margin, **characterised in that** the monitoring device is designed to make available the shut-down signal to the disconnecting device (17) located upstream of the drive device (16) if no radiation of the beam of rays (14) is applied to the first radiation detector (28, 128) at the time of the provision of the test signal, and/or if radiation of the beam of rays (14) is applied to the second radiation detector (27; 127) at the time of the provision of the test signal.

2. Forming device according to claim 1, **characterised in that** the machine control (11) is designed in accordance with a first safety category of a safety standard, the monitoring device (7) and the disconnecting device (17) forming a safe working system designed in accordance with a second safety category of the safety standard and the second safety category being at a higher level than the first safety category within the safety standard.

3. Forming device according to claim 1 or 2, **characterised in that** the machine control (11) comprises a position sensing system (12) for a determination of a position of the tool carrier (4) relative to the machine bed (2), and **in that** it is designed to provide a test signal on reaching a presettable relative position as the tool carrier (4) approaches the machine bed (2).

4. Forming device according to claim 1, 2 or 3, **characterised in that** the radiation detectors (27 to 32; 127 to 132) of the monitoring device (7), which are arranged opposite the radiation source (8) and designed to detect the beams of rays (14) aligned along a working edge (36) of the tool (5), are configured for the detection of a beam of rays (14) at least in pairs.

5. Forming device according to claim 1, 2, 3 or 4, **characterised in that** a first radiation detector (27; 127) is arranged along a closing movement direction (33) of the tool carrier (4) at a distance from the working edge (36) of the tool (5) which corresponds at least to a stopping distance of the tool carrier (4) when the drive device (16) is shut down from the first speed of movement, in particular from a fast traverse.

6. Forming device according to claim 5, **characterised in that** a second radiation detector (27; 127) is arranged along a closing movement direction (33) of the tool carrier (4) at a distance from the working edge (36) of the tool (5) which corresponds at least to a sum of the stopping distance of the tool carrier (4) when the drive device (16) is shut down from the fast traverse and a presettable safety margin.

7. Forming device according to claim 6, **characterised in that** the monitoring device (7) is designed to make available a shut-down signal to a disconnecting device (17) provided upstream of the drive device (16) if no rays of a beam of rays (14) are applied to the first radiation detector (28; 128) on the arrival of the test signal, and/or if rays of a beam of rays (14) are applied to the second radiation detector (27; 127) on the arrival of the test signal.

8. Method for operating a forming device (1) according to any of the preceding claims, **characterised by** the steps of: performing an approach movement of the tool carrier (4) towards the machine bed (2) with a first speed of movement; monitoring an application of radiation to a plurality of radiation detectors (27 to 32; 127 to 132) by means of the monitoring device (7), a first radiation detector (28; 128) being arranged along a closing movement direction (33) of the tool carrier (4) at a distance from the working edge (36) of the tool (5) which corresponds to a stopping distance of the tool carrier (4) when the drive device (16) is shut down from the first speed of movement; determining a position of the tool carrier (4) along the closing movement direction (33) by means of the machine control (11) and provision of a test signal by the machine control (11) to the monitoring device (7) on reaching a presettable relative position determined by the machine control (11); monitoring the application of radiation to the radiation detectors (27 to 32; 127 to 132), a second radiation detector (27; 127) being arranged along the closing movement direction (33) of the tool carrier (4) at a distance from the working edge (36) of the tool (5) which corresponds to a sum of the stopping distance of the tool carrier (4) when the drive device (16) is shut down from the first speed of movement and a presettable safety margin; provision of a shut-down signal to the disconnecting device (17) located upstream of the drive device (16) if no radiation of the beam of rays (14) is applied to the first radiation detector (28, 128) at the time of the provision of the test signal, and/or if radiation of the beam of rays (14) is applied to the second radiation detector (27; 127) at the time of the provision of the test signal.

9. Method according to claim 8 for operating a forming device (1), **characterised in that**, prior to the provision of the test signal, an absence of rays at at least one of the radiation detectors (27 to 32; 127 to 132) results in the provision of the shut-down signal to the disconnecting device (17) located upstream of the drive device (16), the second radiation detector (27; 127) not being taken into account.

10. Method according to claim 8 or 9 for operating a forming device (1), **characterised in that**, following the provision of the test signal by the machine control (11) to the monitoring device (7), the drive device (16) is decelerated to a second, lower, speed of movement if radiation of the beam of rays (14) is applied to the first radiation detector (28, 128) at the time of the provision of the test signal and if radiation of the beam of rays (14) is not applied to the second radiation detector (27; 127) at the time of the provision of the test signal.

11. Method according to claim 10 for operating a forming device (1), **characterised in that**, with the start of the deceleration to the second speed of movement, those radiation detectors (32; 132) which are arranged in a first plane (34) oriented at right angles to the closing movement direction (33) together with the first radiation detector (28, 128) are deactivated.

12. Method according to claim 10 or 11 for operating a forming device (1), **characterised in that**, with the start of the deceleration to the second speed of movement, at least one radiation detector (29), which is arranged in a second plane (35) extending parallel to the first plane (34) and having a smaller distance from the working edge (36) of the tool than the first plane (34), is deactivated on expiry of a presettable period of time.

13. Method according to claim 12 for operating a forming device (1), **characterised in that**, following the provision of the test signal, the deactivated radiation detectors (27, 32; 127, 132) are no longer monitored and only an absence of rays at active radiation detectors (29, 30, 31; 129, 130, 131) results in the provision of the shut-down signal to the disconnecting device (17) provided upstream of the drive device (16).

14. Method according to claim 10, 11, 12 or 13 for operating a forming device (1), **characterised in that**, on reaching the second speed of movement, all radiation detectors (27 to 32; 127 to 132) are deactivated.

15. Method according to any of claims 10 to 14 for operating a forming device (1), **characterised in that** the determination of the presettable relative position at which the test signal is output by the machine control (11) is carried out in a lower safety category according to a presettable safety standard than the checking of the application of radiation to the first and second radiation detectors (27, 28; 127, 128) by the monitoring device (7), which is carried out in accordance with a higher safety category.

## Revendications

1. Dispositif de formage comprenant un banc de machine (2), un porte-outil (4) logé de manière relativement mobile au niveau du banc de machine (2), servant à recevoir un outil (5), un dispositif d'entraînement (16) couplé au porte-outil (4), une commande de machine (11) servant à commander le dispositif d'entraînement (16), et un dispositif de surveillance (7), qui est réalisé afin de surveiller des déplacements du porte-outil (4) et afin de fournir un signal de mise hors service à un dispositif de coupure (17) installé en amont du dispositif d'entraînement (16) en cas de survenue d'un cas de surveillance pouvant être prédéfini, sachant que le dispositif de surveillance comprend au moins une source de rayonnement (8) et plusieurs détecteurs de rayonnement (27 à 32; 127 à 132) disposés de manière à faire face à la source de rayonnement (8) et sachant qu'au moins une partie des faisceaux de rayons (14) partant de la source de rayonnement (8) est orientée le long d'une arête de travail (36) de l'outil (5), sachant que le dispositif de surveillance (7) est réalisé pour effectuer, dans le cas d'un déplacement de rapprochement du porte-outil (4) par rapport au banc de machine (2) à une première vitesse de déplacement, une surveillance au moyen du dispositif de surveillance (7) du rayonnement appliqué sur les détecteurs de rayonnement (27 à 32 ; 127 à 132), sachant qu'un premier détecteur de rayonnement (28; 128) est disposé, le long d'une direction de déplacement de fermeture (33) du porte-outil (4), de manière éloignée à une distance donnée de l'arête de travail (36) de l'outil (5), laquelle distance correspond à une distance de ralentissement du porte-outil (4) lors de la mise hors service du dispositif d'entraînement (16) de manière à quitter la première vitesse de déplacement, et pour déterminer une position du porte-outil (4) le long de la direction de déplacement de fermeture (33) par la commande de machine (11) et pour délivrer un signal de contrôle provenant de la commande de machine (11) au dispositif de surveillance (7) après avoir atteint une position relative pouvant être prédéfinie, déterminée par la commande de machine (11) ainsi que pour surveiller le rayonnement appliqué sur les détecteurs de rayonnement (27 à 32 ; 127 à 132), sachant qu'un deuxième détecteur de rayonnement (27 ; 127) est disposé, le long de la direction de déplacement de fermeture (33) du porte-outil (4), de manière éloignée à une distance donnée de l'arête de travail (36) de l'outil (5), laquelle distance correspond à la somme de la distance de ralentissement du porte-outil (4) lors de la mise hors service du dispositif d'entraînement (16) de manière à quitter la première vitesse de déplacement et une distance de sécurité pouvant être prédéfinie, **caractérisé en ce que** le dispositif de surveillance est réalisé pour fournir le signal de mise hors service au dispositif de coupure (16) installé en amont du dispositif d'entraînement (16), lorsque le rayonnement du faisceau de rayons (14) n'est pas appliqué sur le premier détecteur de rayonnement (28 ; 128) au moment de la fourniture du signal de contrôle et/ou lorsque le rayonnement du faisceau de rayonnement (14) est appliqué sur le deuxième détecteur de rayonnement (27 ; 127) au moment de la fourniture du signal de contrôle.

2. Dispositif de formage selon la revendication 1, **caractérisé en ce que** la commande de machine (11) est réalisée conformément à une première catégorie de sécurité d'une norme de sécurité, sachant que le dispositif de surveillance (7) et le dispositif de coupure (17) forment un système de fonctionnement sûr, qui est réalisé conformément à une deuxième catégorie de sécurité de la norme de sécurité, et sachant que la deuxième catégorie de sécurité relève d'un niveau plus élevé que la première catégorie de sécurité dans le cadre de la norme de sécurité.

3. Dispositif de formage selon la revendication 1 ou 2, **caractérisé en ce que** la commande de machine (11) comprend un système de mesure de trajet parcouru (12) en vue d'une détermination d'une position relative du porte-outil (4) par rapport au banc de machine (2) et est réalisée pour fournir un signal de contrôle après avoir atteint une position relative pouvant être prédéfinie au cours d'une opération de rapprochement du porte-outil (4) du banc de machine (2).

4. Dispositif de formage selon la revendication 1, 2 ou 3, **caractérisé en ce que** les détecteurs de rayonnement (27 à 32 ; 127 à 132), disposés de manière à faire face à la source de rayonnement (8), du dispositif de surveillance (7), lesquels sont réalisés afin de détecter les faisceaux de rayons (14) orientés le long de l'arête de travail (36) de l'outil (5), sont mis en place respectivement au moins par paire afin de détecter un faisceau de rayons (14).

5. Dispositif de formage selon la revendication 1, 2, 3 ou 4, **caractérisé en ce qu'**un premier détecteur de rayonnement (27 ; 127) est disposé, le long d'une direction de déplacement de fermeture (33) du porte-outil (4), de manière éloignée à une distance donnée de l'arête de travail (36) de l'outil (5), laquelle distance correspond au moins à une distance de ralentissement du porte-outil (4) lors de la mise hors service du dispositif d'entraînement (16) de manière à quitter une première vitesse de déplacement, en particulier une marche rapide.

6. Dispositif de formage selon la revendication 5, **caractérisé en ce qu'**un deuxième détecteur de rayonnement (27 ; 127) est disposé, le long de la direction de déplacement de fermeture (33) du porte-outil (4), de manière éloignée à une distance donnée de l'arête de travail (4) de l'outil (5), laquelle distance correspond à une somme de la distance de ralentissement du porte-outil (4) lors de la mise hors service du dispositif d'entraînement (16) de manière à quitter la marche rapide et une distance de sécurité pouvant être prédéfinie.

7. Dispositif de formage selon la revendication 6, **caractérisé en ce que** le dispositif de surveillance (7) est réalisé en vue d'une fourniture du signal de mise hors service au dispositif de coupure (17) installé en amont du dispositif d'entraînement (16), lorsque des rayons d'un faisceau de rayons (14) ne sont pas appliqués sur le premier détecteur de rayonnement (28 ; 128) à réception du signal de contrôle et/ou lorsque des rayons d'un faisceau de rayons (14) sont appliqués sur le deuxième détecteur de rayonnement (27 ; 127) à réception du signal de contrôle.

8. Procédé servant à faire fonctionner un dispositif de formage (1) selon l'une quelconque des revendications précédentes, **caractérisé par** les étapes suivantes consistant à : exécuter un déplacement de rapprochement du porte-outil (4) par rapport au banc de machine (2) à une première vitesse de déplacement ; surveiller le rayonnement appliqué sur les nombreux détecteurs de rayonnement (27 à 32 ; 127 à 132) au moyen du dispositif de surveillance (7), sachant qu'un premier détecteur de rayonnement (28 ; 128) est disposé, le long d'une direction de déplacement de fermeture (33) du porte-outil (4), de manière éloignée à une distance donnée de l'arête de travail (36) de l'outil (5), laquelle distance correspond à une course de ralentissement du porte-outil (4) lors de la mise hors service du dispositif d'entraînement (16) de manière à quitter la première vitesse de déplacement ; déterminer une position du porte-outil (4) le long de la direction de déplacement de fermeture (33) par la commande de machine (11) ; et fournir un signal de contrôle provenant de la commande de machine (11) au dispositif de surveillance (7) après avoir atteint une position relative pouvant être prédéfinie, déterminée par la commande de machine (11) ; surveiller l'application du rayonnement sur les détecteurs de rayonnement (27 à 32 ; 127 à 132), sachant qu'un deuxième détecteur de rayonnement (27 ; 127) est disposé, le long de la direction de déplacement de fermeture (33) du porte-outil (4), de manière éloignée à une distance donnée de l'arête de travail (36) de l'outil (5), laquelle distance correspond à une somme de la distance de ralentissement du porte-outil (4) lors de la mise hors service du dispositif d'entraînement (16) de manière à quitter la première vitesse de déplacement et une distance de sécurité pouvant être prédéfinie ; fournir le signal de mise hors service au dispositif de coupure (16) installé en amont du dispositif d'entraînement (16) lorsque le rayonnement du faisceau de rayons (14) est appliqué sur le premier détecteur de rayonnement (28 ; 128) au moment de la fourniture du signal de contrôle et/ou lorsque le rayonnement du faisceau de rayons (14) est appliqué sur le deuxième détecteur de rayonnement (27 ; 127) au moment de la fourniture du signal de contrôle.

9. Procédé servant à faire fonctionner un dispositif de formage (1) selon la revendication 8, **caractérisé en ce qu'**une absence de rayons sur au moins un des détecteurs de rayonnement (27 à 32 ; 127 à 132) conduit, avant la fourniture du signal de contrôle, à la fourniture du signal de mise hors service au dispositif de coupure (17) installé en amont du dispositif d'entraînement (16), sachant que le deuxième détecteur de rayonnement (27 ; 127) n'est pas pris en compte.

10. Procédé servant à faire fonctionner un dispositif de formage (1) selon la revendication 8 ou 9, **caractérisé en ce qu'**un ralentissement du dispositif d'entraînement (16) à une deuxième vitesse de déplacement inférieure a lieu après la fourniture du signal de contrôle provenant de la commande de machine (11) au dispositif de surveillance (7) lorsque le rayonnement du faisceau de rayons (14) est appliqué sur le premier détecteur de rayonnement (28 ; 128) au moment de la fourniture du signal de contrôle et lorsque le rayonnement du faisceau de rayons (14) n'est pas appliqué sur le deuxième détecteur de rayonnement (27 ; 127) au moment de la fourniture du signal de contrôle.

11. Procédé servant à faire fonctionner un dispositif de formage (1) selon la revendication 10, **caractérisé en ce qu'**est effectuée, avec le début du ralentissement à la deuxième vitesse de déplacement, une désactivation des détecteurs de rayonnement (32 ; 132), qui précisément sont disposés dans un premier plan (34) orienté de manière transversale par rapport à la direction de déplacement de fermeture (33), en commun avec le premier détecteur de rayonnement (28 ; 128).

12. Procédé servant à faire fonctionner un dispositif de formage (1) selon la revendication 10 ou 11, **caractérisé en ce qu'**est désactivé après l'écoulement d'une durée pouvant être prédéfinie, avec le début du ralentissement à la deuxième vitesse de déplacement, au moins un détecteur de rayonnement (29), qui est disposé dans un deuxième plan (35) disposé de manière parallèle par rapport au premier plan (34), lequel présente une distance par rapport à l'arête de travail (36) de l'outil inférieure à celle du premier plan (34).

13. Procédé servant à faire fonctionner un dispositif de formage (1) selon la revendication 12, **caractérisé en ce que**, n'est effectuée, après la fourniture du signal de contrôle, aucune surveillance des détecteurs de rayonnement (27, 32 ; 127, 132) respectivement désactivés, et **en ce qu'**une absence de rayons sur des détecteurs de rayonnement (29, 30, 31 ; 129, 130, 131) actifs seulement conduit à la fourniture du signal de mise hors service au dispositif de coupure (17) installé en amont du dispositif d'entraînement (16).

14. Procédé servant à faire fonctionner un dispositif de formage (1) selon la revendication 10, 11, 12 ou 13, **caractérisé en ce qu'**est effectuée une désactivation de tous les détecteurs de rayonnement (27 à 32 ; 127 à 132) après avoir atteint la deuxième vitesse de déplacement.

15. Procédé servant à faire fonctionner un dispositif de formage (1) selon l'une quelconque des revendications 10 à 14, **caractérisé en ce que** la détermination de la position relative pouvant être prédéfinie, au niveau de laquelle le signal de contrôle est émis par la commande de machine (11), est effectuée à une catégorie de sécurité selon une norme de sécurité pouvant être prédéfinie plus basse que celle de la surveillance de l'application du rayonnement sur le premier et le deuxième détecteur de rayonnement (27, 28 ; 127, 128) du dispositif de surveillance (7), laquelle se fait selon une catégorie de sécurité plus élevée.
